# EUROPÄISCHE PATENTSCHRIFT

(11) **EP 2 084 215 B1**
(45) Veröffentlichungstag und Bekanntmachung des Hinweises auf die Patenterteilung: **24.03.2010**
(21) Anmeldenummer: 07802636.6
(22) Anmeldetag: 16.08.2007
(51) Int. Cl.: C08J 9/00, C08L 63/00

(54) **DUKTILE STRUKTURSCHÄUME**
DUCTILE STRUCTURAL FOAMS
MOUSSE STRUCTURÉE DUCTILE

(30) Priorität: 24.10.2006 DE 102006050697
(43) Veröffentlichungstag der Anmeldung: 05.08.2009
(73) Patentinhaber: Henkel AG & Co. KGaA, 40589 Düsseldorf (DE)
(72) Erfinder: MÜNZ, Xaver, 69117 Heidelberg (DE); BOBB, Larissa, 69181 Leimen (DE)
(86) Internationale Anmeldenummer: PCT/EP2007/058494
(87) Internationale Veröffentlichungsnummer: WO 2008/049660

(56) Entgegenhaltungen:
- EP-A- 1 672 010
- WO-A-03/054069
- WO-A-2004/065485
- QUNLI LIU ET AL: "A Parametric Study on Crushability of Open-Cell Structural Polymeric Foams" JOURNAL OF POROUS MATERIALS, KLUWER ACADEMIC PUBLISHERS, BO, Bd. 12, Nr. 3, 1. Juli 2005 (2005-07-01), Seiten 233-248, XP019212418 ISSN: 1573-4854

## Beschreibung

Die Erfindung betrifft expandierbare, thermisch härtbare Zusammensetzungen auf Basis von Epoxidharzen, sowie Verfahren zum Versteifen und/oder Verstärken von Bauteilen mit dünnwandigen Strukturen, insbesondere Karosseriebauteile im Fahrzeugbau mit Hilfe dieser Strukturschäume.

Leichtbauteile für eine konstant maßhaltige Serienfertigung mit hoher Steifigkeit und Strukturfestigkeit werden für viele Anwendungsfelder benötigt. Insbesondere im Fahrzeugbau ist wegen der dort gewünschten Gewichtsersparnis ein hoher Bedarf für Leichtbauteile aus dünnwandigen Strukturen, die trotzdem ausreichende Steifigkeit und Strukturfestigkeit besitzen. Ein Weg zur Erzielung hoher Steifigkeit und Strukturfestigkeit bei möglichst niedrigen Gewicht des Bauteils benutzt Hohlteile, die aus verhältnismäßig dünnem Blech oder Kunststoffplatten gefertigt sind. Dünnwandige Bleche neigen jedoch zu leichten Deformation. Daher ist es bereits seit einiger Zeit bekannt, bei Hohlkörperstrukturen diesen Hohlraum mit einem Strukturschaum auszuschäumen, wodurch einerseits die Deformation oder Verformung verhindert oder minimiert wird und andererseits Festigkeit und Steifigkeit dieser Teile erhöht werden. Für flächige Teile von Automobilkarossen wie Türen, Dachteilen, Motorraumhauben oder Kofferraumdeckeln ist es auch bekannt, die Steifigkeit und Festigkeit dieser Teile dadurch zu erhöhen, dass schichtförmige Laminate auf der Basis von expandierbaren oder nicht expandierbaren Epoxidharzen oder Polyurethanharzen auf diese Teile aufgebracht und mit diesen fest verbunden werden.

Üblicherweise sind derartige geschäumte Verstärkungs- und Versteifungsmittel entweder Metallschäume oder sie enthalten ein thermisch härtbares Harz oder Bindemittel wie z.B. Epoxidharze. Diese Zusammensetzungen enthalten in der Regel ein Treibmittel, Füllstoffe und verstärkende Füllstoffe wie z.B. Mikrohohlkugeln aus Glas. Vorzugsweise haben solche Schäume im aufgeschäumten und ausgehärteten Zustand eine Dichte von 0,3 bis 0,7 g/cm³. Diese Schäume sollen Temperaturen von mehr als 130°C, vorzugsweise mehr als 150°C zumindest kurzfristig schadlos überstehen. Derartige schäumbare, thermisch härtbare Zusammensetzungen enthalten in der Regel weitere Bestandteile wie Härtungsagenzien, Prozesshilfsmittel, Stabilisatoren, Farbstoffe oder Pigmente, gegebenenfalls UV-Absorber sowie haftungsverstärkende Bestandteile.

Die US-A-4,978,562 beschreibt einen spezifisch leichten, verstärkenden Türbalken aus einem Verbundmaterial bestehend aus einem Metallrohr, das teilweise durch ein spezifisch leichtes Polymer mit Zellstruktur gefüllt ist. Es wird vorgeschlagen, härtbare Harze auf der Basis von Epoxidharzen, Vinylesterharzen, ungesättigten Polyesterharzen und Polyurethanharzen mit den entsprechenden Härtern, Füllstoffen und zellbildenden Agenzien in einem Extruder zu mischen, diese Mischung zu einem Kern auszuhärten und so in das Metallrohr einzubringen, dass der Kern durch Reibungskräfte oder mechanisch in dem Rohr fixiert wird. Alternativ kann der Polymerkern aus flüssigem oder pastösem polymeren Material durch Gießen hergestellt werden und in das Rohr eingepresst werden. Reaktive, hitzehärtbare und thermisch expandierende Formkörper werden nicht offenbart.

Die US-A-4,769,391 beschreibt ein vorgeformtes Verbundeinlegeteil zum Einlegen in einen hohlen Strukturkörper. Dieses Einlegeteil enthält eine Vielzahl thermoplastischer Granulate aus einer Mischung eines thermoplastischen Harzes und nicht expandierten, expandierbaren Mikrohohlkugeln und einer Matrix aus expandiertem Polystyrol, das die vorgenannten Granulate enthält. Das thermoplastische Harz der Granulate kann dabei ein Thermoplast sein, wie beispielsweise ein thermoplastischer Polyester, oder es kann ein hitzehärtbares Epoxidharz sein. Nach dem Einlegen des Teils in den auszufüllenden Hohlkörper wird das Bauteil auf eine Temperatur erhitzt, die ein "Verdampfen" des expandierten Polystyrols bewirkt - Verdampfen bedeutet hier Abbau des expandierten Polystyrols zu einem dünnen Film oder Ruß. Gleichzeit expandieren die thermoplastischen Granulatkörner und härten gegebenenfalls aus, wobei je nach Expansionsgrad des Granulates mehr oder weniger große Hohlräume zwischen den einzelnen expandierten Granulatteilchen bestehen bleiben.

Die WO 89/08678 beschreibt ein Verfahren und Zusammensetzungen zur Verstärkung von Strukturelementen, wobei das polymere verstärkende Material ein zweikomponentiges Epoxysystem ist, bei dem die eine Komponente eine teigartige Masse auf der Basis von Epoxidharzen und die zweite Komponente eine Mischung aus Füllstoffen, einem Farbpigment sowie einem flüssigen Härtungsagens von teigiger Konsistenz ist. Unmittelbar vor der Einfüllung des verstärkenden Materials in die Hohlstruktur werden die beiden Komponenten gemischt, in die Hohlkörperstruktur eingetragen und ausgehärtet, wobei die Hohlkörperstruktur gegebenenfalls vorgeheizt werden kann.

Die WO 98/15594 beschreibt geschäumte Produkte für Anwendungen in der Automobilindustrie auf der Basis von vorzugsweise flüssigen, zweikomponentigen Epoxidsystemen, bei denen die eine Komponente aus einem flüssigen Epoxidharz und Metallcarbonaten oder -bicarbonaten und die andere Komponente aus Pigmenten, gegebenenfalls Hohlkugeln sowie Phosphorsäure besteht. Beim Mischen der beiden Komponenten härten diese Zusammensetzungen unter Aufschäumen aus. Anwendungen zur Verstärkung oder Versteifung von hohlen Strukturen werden nicht offenbart.

In der WO 2004/065485A1 werden Zusammensetzungen beschrieben, die mindestens ein flüssiges Epoxidharz, mindestens ein festes Epoxidharz, mindestens ein Treibmittel, mindestens eine Härter sowie mindestens einen glimmerhaltigen Füllstoff enthalten. Diese Zusammensetzungen ergeben expandierbare, thermisch härtbare Bindemittelsysteme, die ohne den Zusatz von Glashohlkugeln zur Herstellung von versteifenden und verstärkenden Schichtkörpern sowie zur Herstellung von versteifenden und verstärkenden Formkörpern verwendet werden können. Diese erfindungsgemäße Schichtkörper eigenen sich zum Versteifen und Verstärken von Bauteilen, insbesondere im Automobilbau wie Karosserierahmen, Türen, Kofferraumdeckel, Motorhaube und/oder Dachteilen. Weiterhin eignen sich die aus diesen Bindemitteln herstellbaren Formkörper zum Versteifen und Verstärken von metallischen Hohlstrukturen, insbesondere von Karosseriehohlteilen wie Karosserierahmen, Karosserieträgem und Säulen oder Türen im Automobilbau. Über die bruchmechanischen Eigenschaften der in der WO02004065485A1 beschriebenen Strukturschäume werden keine Angaben gemacht.

EP-A-1 672 010 offenbart zweikomponentige Ktebstoffzusammensetzungen zur Herstellung geschäumter Versteifungsmittel bestehend aus A) einer Epoxy-Komponente enthaltend mindestens ein bei Raumtemperatur flüssiges Epoxidharz mit mindestens 2 Epoxygruppen pro Molekül, mindestens einem Reaktivverdünner, Füllstoffe und/oder Leichtfüllstoffe sowie Treibmittel und gegebenenfalls Pigmente; und B) eine Härterkomponente enthaltend mindestens ein aliphatisches Polyaminoamid, mindestens ein Polyaminoaddukt auf der Basis von Triethylentetramin, Füllstoffe und/oder Leichtfüllstoffe sowie Treibmittel.

WO 03/054069 A offenbart expandierbare, thermisch härtbare Zusammensetzungen enthaltend
a) mindestens ein Epoxidharz,
b) ein thermoplastisches Harz,
d) mindestens ein Treibmittel,
e) mindestens einen Härter,
f) mindestens einen Füllstoff.

QUNLI LIU AL:"A Parametric Study on Crushability of Open-Cell Structural Polymeric Foams" JOURNAL OF POROUS MATERIALS, KLUWER ACADEMIC PUBLISHERS, BO, Bd. 12, Nr. 3, 1. Juli 2005 (2005-07-01), Seiten 233-248, XP019212418 ISSN: 1573-4854 offenbart eine Studie der Druckspannung und Druckfestigkeiten von Strukturschäumen. Epoxidzusammensetzungen sind erwähnt.

Vor dem Hintergrund des vorgenannten Standes der Technik haben sich die Erfinder die Aufgabe gestellt, Zusammensetzungen für Formteile zur Verstärkung und/oder Versteifung von Blechen oder metallischen Hohlkörpern bereitzustellen, die
- ein duktiles Verhalten von - 20 bis +80°C aufweisen, wobei
- kein Absenken des Kraftniveaus erfolgen soll.

Dadurch werden verbesserte FEA-Berechnungen (Finite Element Analysis) möglich, da ein konstantes Kraftniveau über den Verformungsbereich erzielt wird. Dies ermöglicht neue Einsatzgebiete, da bei Belastung eine definierte Verformung des Strukturschaums erfolgt, anstatt eines spröden Zerplatzens der Schäume bei geringen Verformungen.

Die erfindungsgemäße Lösung der Aufgabe ist den Patentansprüchen zu entnehmen. Sie besteht im Wesentlichen in der Bereitstellung von Bindemitteln zur Herstellung expandierbarer, thermisch härtbarer Formkörper, die
a) mindestens ein Epoxidharz,
b) mindestens eine bei Raumtemperatur feste Phenolverbindung,
c) mindestens ein Polyetheramin,
d) mindestens ein Treibmittel,
e) mindestens einen Härter und
f) mindestens einen Füllstoff enthalten.

Vorzugsweise werden aus den expandierbaren, thermisch härtbaren Zusammensetzungen im Spritzgußverfahren bei niedrigen Drücken und niedrigen Temperaturen thermisch expandierbare Formkörper hergestellt, die zum Versteifen und/oder Verstärken vom metallischen Bauteilen verwendet werden können.

Ein weiterer Gegenstand der vorliegenden Erfindung ist somit ein Verfahren zum Versteifen und/oder Verstärken von metallischen Bauteilen, insbesondere Bauteilen für "weiße Ware" (Küchengeräte oder -Maschinen) oder Karosseriebauteilen, das die folgenden wesentlichen Verfahrensschritte beinhaltet.

In einer ersten Stufe werden die vorgenannten Bindemittelbestandteile bei Temperaturen unterhalb von 110 °C homogen gemischt und anschließend in eine Spritzgießanlage transferiert. Dazu wird die homogene Mischung entweder als Masse ("bulk") in Lager- und Transportbehälter extrudiert. In einer weiteren Ausführungsform die kann Mischung als dicker Strang (in Form von "Würsten") extrudiert und ggf. zwischengelagert werden. Alternativ kann die Mischung in Granulatform extrudiert werden.

In einem anschließenden Schritt wird das Bindemittelgemisch bei Temperaturen von 60 °C bis 110 °C, vorzugsweise bei Temperaturen von 70 °C bis 90 °C unter temperierten Bedingungen in eine Spritzgussform eingespritzt. Ggf. befindet sich in dieser Form ein Träger aus Metall oder thermoplastischen Werkstoffen, auf den das expandierbare Bindemittel aufgespritzt wird. Anschließend erfolgt die Abkühlung des Formteils auf Temperaturen unterhalb von 50 °C. Beim Entformen ist die Oberfläche des expandierbaren Bindemittels klebfrei, so dass die expandierbaren Formkörper ohne besonderen Aufwand verpackt werden können und auch im Sommer problemlos lange Transporte in südliche Länder überstehen, ohne dass der Einsatz von Kühlwagen erforderlich ist.

Zur Endanwendung wird das expandierbare Formteil auf dem flächigen metallischen Substrat oder in den zu versteifenden Hohlraum, beispielsweise einer Fahrzeugkarosserie, eingebracht und fixiert. Bei den Prozesswärmen der nachfolgenden Lackieröfen wird bekanntlich die Fahrzeugkarosserie auf Temperaturen zwischen 110 °C und 200 °C gebracht. Bei diesem Erwärmen expandiert das Volumen des Strukturschaums um 50 bis 300% und die Reaktionsharz-Matrix härtet zu einem Duroplasten aus.

Ein weiterer Gegenstand der vorliegenden Erfindung ist somit die Verwendung der expandierbaren Formkörper zur Versteifung und Verstärkung von flächigen Blechteilen und/oder metallischen Hohlstrukturen, insbesondere von Karosseriehohlteilen wie Karosserierahmen, Karosserieträgern, Karosseriesäulen sowie breiteren Fugen und Spalten zwischen Karosserieteilen im Automobilbau oder von Bauteilen für "weiße Ware".

Nachfolgend wird das Bindemittelsystem, das für ein Spritzgussverfahren zur Herstellung hitzehärtbarer, thermisch expandierbarer Formkörper besonders geeignet ist, näher beschrieben.

Als Epoxidharze eignen sich eine Vielzahl von Polyepoxiden, die mindestens 2 1,2-Epoxigruppen pro Molekül haben. Das Epoxid-Äquivalent dieser Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weiterhin können die folgenden Polyepoxide zumindest anteilig mit verwendet werden: Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Gegebenenfalls können die erfindungsgemäßen Bindemittel-Zusammensetzung Reaktivverdünner enthalten. Reaktive Verdünner im Sinne dieser Erfindung sind Epoxigruppen enthaltende, niederviskose Substanzen (Glycidylether oder Glycidylester) mit aliphatischer oder aromatischer Struktur. Diese Reaktivverdünner können einerseits zur Viskositätserniedrigung des Bindemittel-Systems oberhalb des Erweichungspunktes dienen, andererseits können sie den Vorgelierungsprozeß im Spritzguß steuern. Typische Beispiele für erfindungsgemäß einzusetzende Reaktivverdünner sind Mono-, Di- oder Triglycidy= lether von C6- bis C14- Monoalkoholen oder Alkylphenolen sowie die Monoglycidylether des Cashewnuss-Schalenöls, Diglycidylether des Ethylenglycols, Diethylenglycols, Triethylenglycols, Tetraethylenglycols, Propylenglycols, Dipropylenglycols, Tripropylenglycols, Tetrapropylenglycols, 1,4-Butylenglycols, 1,5-Pentandiols, 1,6-Hexandiols, Cyclohexandimethanols, Triglycidylether des Trimethylolpropans sowie die Glycidylester von C6- bis C24- Carbonsäuren oder deren Mischungen.

Geeignete Phenolverbindungen sind bei Raumtemperatur (d. h. in einem Temperaturbereich zwischen 18 °C und 25 °C, vorzugsweise bei 22 °C) fest und haben ein Molekulargewicht (Mₙ) zwischen 2 800 und 9 000. Vorzugsweise sind die Phenolverbindungen difunktionell in Bezug auf die phenolischen Gruppen, d.h. sie haben einen Gehalt an phenolischen Hydroxylgruppen zwischen 1 400 und 2 500 mmol/kg. Prinzipiell sind alle Phenolverbindungen geeignet, die die vorgenannten Kriterien erfüllen, ganz besonders bevorzugt sind jedoch Umsetzungsprodukte aus difunktionellen Epoxyverbindungen mit Bisphenol A im stöchiometrischen Überschuß.

Als Polyetheramine können bevorzugt aminoterminierte Polyalkylenglycole, insbesondere die difunktionellen aminoterminierten Polypropylenglycole, Polyethylenglycole oder Copolymere von Propylenglycol und Ethylenglycol eingesetzt werden. Diese sind auch unter dem Namen "Jeffamine" (handelsname der Firma Huntsman) bekannt. Geeignet sind weiterhin die difunktionellen aminoterminierten Polyoxytetramethylenglycole, auch Poly-THF genannt. Der Molekulargewichtsbereich (Mₙ) der vorzugsweise difunktionellen Polyetheramine (bezogen auf die primären Aminogruppen) liegt zwischen 900 und 4 000, vorzugsweise zwischen 1 500 und 2 500.

Als Treibmittel eignen sich zwar im Prinzip alle bekannten Treibmittel wie z. B. die "chemischen Treibmittel" die durch Zersetzung Gase freisetzten oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden jedoch die expandierbaren Kunststoffmikrohohlkugeln auf der Basis von Polyvinylidenchloridcopolymeren oder Acrylnitril/(Meth)acrylat-Copolymeren, diese sind z.B. unter den Namen "Dualite" bzw. "Expancel" von den Firmen Pierce & Stevens bzw. Casco Nobel im Handel erhältlich.

Als Härter werden thermisch aktivierbare oder latente Härter für das Epoxidharz-Bindemittelsystem eingesetzt. Diese können ausgewählt werden aus den folgenden Verbindungen Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanuguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Für die das erfindungsgemäße hitzehärtende Bindemittelsystem ist selbstverständlich das Auswahlkriterium die niedrige Löslichkeit dieser Stoffe bei Raumtemperatur in dem Bindemittelsystem, so dass hier feste, feinvermahlene Härter den Vorzug haben, insbesondere ist Dicyandiamid geeignet. Damit ist eine gute Lagerstabilität der Zusammensetzung gewährleistet.

Zusätzlich oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden, diese haben jedoch vielfach eine zu hohe Löslichkeit in dem Bindemittelsystem, so dass hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethyaminoethanol, N-substituierte Piperazine, N-substituierte Homopiperazine, N-substituierte Aminophenole an Di- oder Polyglycidylether des Bisphenols A oder F oder des Resorcins. Derartige Amin-Epoxy Addukte werden beispielsweise in den folgenden Schriften beschrieben: JP 59- 053526, US 3 756 984, US 4 066 625, US 4 268 656, US 4 360 649, US 4 542 202, US 4 546 155, US 5 134 239, US 5 407 978, US 5 543 486, US 5 5548 058, US 5 430 112, US 5 464 910, US 5 439 977, US 5 717 011, US 5 733 954, US 5 789 498, US 5 798 399, US 5 801 218, EP 950 677.

Die erfindungsgemäßen thermisch härtbaren Zusammensetzungen können ferner feinteilige thermoplastische Copolymere enthalten. Diese thermoplastischen Polymerpulver könnten im Prinzip aus einer Vielzahl von feinteiligen Polymerpulvern ausgewählt werden, beispielhaft erwähnt seien Vinylacetat-Homopolymer, Vinylacetatcopolymer, Ethylenvinylacetat-Copolymer, Vinylchlorid-Homopolymer (PVC) oder Copolymere des Vinylchlorids mit Vinylacetat und/oder (Meth)acrylaten, Styrol-Homo- oder -Copolymere, (Meth)acrylat-Homo- oder -Copolymere oder Polyvinylbutyral. Besonders bevorzugt sind dabei Ethylen-vinylacetat-Copolymere, die ggf. weitere Comonomere wie z.B. Kohlenmonoxid enthalten können. Der Schmelzbereich der vorgenannten Copolymeren soll zwischen 40 °C und 60 °C liegen. Zur Flexibilisierung können als feinteilige thermoplastische Copolymere auch Festkautschuke verwendet werden. Sie haben ein Molekulargewicht Mₙ von 100 000 oder höher. Beispiele für geeignete Festkautschuke sind Polybutadien, Styrol-Butadien-Kautschuk, Butadien-Acrylnitril-Kautschuk, EPDM, synthetischer oder natürlicher Isoprenkautschuk, Butylkautschuk oder Polyurethankautschuk. Besonders geeignet sind teilvernetzte Festkautschuken auf der Basis von Isopren- Acrylnitril- oder Butadien- Acrylnitril-Copolymeren. Der Anteil an Festkautschuk kann 0 bis 15 Gew.%, vorzugsweise 2 bis 10 Gew.% der gesamten Bindemittelzusammensetzung betragen.

In der Regel enthalten die erfindungsgemäßen thermisch härtbaren Zusammensetzungen weiterhin an sich bekannte Füllstoffe wie zum Beispiel die diversen gemahlenen oder gefällten Kreiden, Ruß, Calcium-Magnesiumcarbonate, Schwerspat sowie insbesondere silikatische Füllstoffe vom Typ des Aluminium-Magnesium-Calcium-Silicats, z. B. Wollastonit, Chlorit. Vorzugsweise können Glimmer- haltige Füllstoffe mit verwendet werden, ganz besonders bevorzugt ist hier ein so genannter 2- Komponentenfüllstoff aus Muskovit- Glimmer und Quarz mit niedrigem Schwermetallgehalt.

Erfindungsgemäßes Ziel ist es, die expandlerbaren, thermisch härtbaren Zusammensetzungen zur Herstellung von Formkörpern für spezifisch leichte Strukturen einzusetzen. Daher enthalten sie vorzugsweise zusätzlich zu den vorgenannten "normalen" Füllstoffen sog. Leichtfüllstoffe, die ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Formkörpermatrix eine hohe Druckfestigkeit des Formkörpers gewährleisten.

In einer besonders bevorzugten Ausführungsform enthalten die Zusammensetzungen für die thermisch härtbaren, expandierbaren Formkörper zusätzlich Fasern auf der Basis von Aramidfasern, Kohlenstoff-Fasern, Metallfasern - z.B. aus Aluminium -, Glasfasern, Polyamidfasern, Poiyethylenfasern oder Polyesterfasern, wobei diese Fasern vorzugsweise Pulpfasern oder Stapelfasern sind, die eine Faserlänge zwischen 0,5 und 6 mm halben und eine Durchmesser von 5 bis 20 µm. Besonders bevorzugt sind hierbei Polyamidfasern vom Typ der Aramidfaser oder auch Polyesterfasern.

Weiterhin können die erfindungsgemäßen Zusammensetzungen gängige weitere Hilfs- und Zusatzmittel wie z. B. Weichmacher, Reaktivverdünner, Rheologie-Hilfsmittel, Netzmittel, Haftvermittler, Alterungsschutzmittel, Stabilisatoren und/oder Farbpigmente enthalten. Je nach Anforderungsprofil an den Formkörper in Bezug auf seine Verarbeltungseigenschaften, die Flexibilität, die geforderte Versteifungswirkung sowie der klebende Verbund zu den Substraten können die Mengenverhältnisse der Einzelkomponenten in verhältnismäßig weiten Grenzen variieren. Typische Bereiche für die wesentlichen Komponenten sind:

| | | |
|---|---|---|
| (a) | festes Epoxidharz | 2 bis 65 Gew%, |
| (b) | Phenolverbindung | 1 bis 30 Gew.%, vorzugsweise 5 bis 10 Gew.%, |
| (c) | Polyetheramin | 0,5 bis 15 Gew.%, vorzugsweise 2 bis 10 Gew.%, |
| (d) | Treibmittel | 0,1 bis 5 Gew.%, |
| (e) | Härter und Beschleuniger | 1,5 bis 5 Gew.%, |
| (f) | Glimmerhaltiger Füllstoff | 0 bis 40 Gew.%, vorzugsweise 1 bis 30 Gew.%, |
| (g) | Weitere Füllstoffe | 5 bis 20 Gew.-% |
| (h) | Reaktivverdünner | 0 bis 15 Gew.-%, vorzugsweise 0 bis 10 Gew.-% |
| (i) | Ethylen-Vinylacetat-Copolymer | 0 bis 10 Gew.%, vorzugsweise 1 bis 10 Gew.%, |
| (j) | Fasern | 0 bis 30 Gew.%, vorzugsweise 0 bis 10 Gew.%, |
| (k) | Pigmente | 0 bis 1 Gew.%, |

wobei die Summe der Gesamtbestandteile 100 Gew.% ergibt.

Zur vereinfachten Förderung und Weiterverarbeitung liegt die expandierbare, thermisch härtbare Zusammensetzung vor der Herstellung der eigentlichen Formteile vorzugsweise in Granulatform vor.

Die vorliegende Erfindung umfasst weiterhin Verfahren zur Herstellung von expandierbaren, thermisch härtbaren Formkörpern aus der vorstehend beschriebenen erfindungsgemäßen Zusammensetzung. Hierbei sind zwei Verfahrensvarianten möglich:

### Variante I):

a) Mischen der Zusammensetzungs-Bestandteile nach mindestens einem der Ansprüche 1 bis 15 bei Temperaturen unterhalb von 110 °C, vorzugsweise zwischen 80 und 95 °C
b) Extrusion der Zusammensetzung bei Temperaturen unterhalb von 110 °C, vorzugsweise 80°C bis 95 °C, unter Granulatbildung ggf. auf ein gekühltes Metallband,
c) Abkühlen des so geformten Granulats,
d) Ggf. Zwischenlagerung des Granulats, vorzugsweise in Containern, Big Bags, Fässern oder Säcken,
e) Förderung des Granulates in eine Spritzguss-Maschine.
f) Aufschmelzen des Granulates bei Temperaturen unterhalb von 110 °C und Injektion der Schmelze in die vorbestimmte Form der Spritzguss-Maschine,
g) Abkühlen des gebildeten Formkörpers und Entnahme des Formkörpers aus der Form.

### Variante II):

a) Mischen der Zusammensetzungs- Bestandteile nach mindestens einem der Ansprüche 1 bis 15 bei Temperaturen unterhalb von 110 °C, vorzugsweise zwischen 80 und 95 °C
b) Extrusion der Zusammensetzung bei Temperaturen unterhalb von 110 °C, vorzugsweise 80 °C bis 95 °C, unter Bildung eines geformten Zwischenproduktes,
c) Abkühlen des so geformten Zwischenproduktes,
d) ggf. Zwischenlagerung des geformten Zwischenproduktes, vorzugsweise in Regalen oder Fässern,
e) Förderung des geformten Zwischenproduktes in den Vorratsbehälter einer Spritzguss-Maschine,
f) Aufschmelzen des geformten Zwischenproduktes bei Temperaturen unterhalb von 110 °C und Injektion der Schmelze in die vorbestimmte Form der Spritzguss-Maschine,
g) Abkühlen des gebildeten Formkörpers und Entnahme des Formkörpers aus der Form.

Zum Umfang der vorliegenden Erfindung gehört weiterhin ein spritzgegossener Formkörper, der nach einer dieser Verfahrensvarianten hergestellt wurde.

Die aus den erfindungsgemäßen Zusammensetzungen herstellbaren Strukturschäume zeichnen sich durch ein duktiles Verhalten bei Druck- oder Biegebelastung aus, d.h. bei Druckbelastung oder im Dreipunkt-Biegeversuch wird eine elastische Verformung beobachtet, während die Strukturschäume nach dem Stand der Technik sehr spröde sind und bei Belastung im Temperaturbereich von -40 bis ca. 80°C zerspringen. Letztere Strukturschäume zeigen nach Überschreiten der Anrisskraft bei weiterer Erhöhung der Belastung ein undefiniertes Zerbrechen, das heißt einen spröden Zerfall der Struktur. Die erfindungsgemäß herstellbaren Strukturschäume zeigen bei Belastung die Bildung eines Kraftplateaus mit nur geringer Anrisskraftüberhöhung (Deformation anstelle von Bruch). Damit kann die eingebrachte Energie beim Crash definiert abgeführt/aufgenommen werden.

Bei der Druckbelastung (Stauchung) der erfindungsgemäß herstellbaren Strukturschäume im so genannten "Compression Test" wird selbst bei -20 °C zunächst ein steiler Anstieg der Druckspannung ("compression strength") auf Werte von mindestens .15 MPa, insbesondere auf Werte zwischen 20 und 30 MPa (bei Deformation des Prüfkörpers um 10 bis 15%) beobachtet und bei weiterer Deformation des Prüfkörpers auf 50% wird dieses Kraftniveau gehalten, d.h. es erfolgt kein signifikanter Abfall des Kraftnlveaus. Bei 0 °C sind die entsprechenden Druckspannungen 15 bis 25 MPa (bei Deformation des Prüfkörpers um 10 bis 15%) und 20 bis 35 MPa (bei Deformation des Prüfkörpers um 50 %). Die Bestimmung der Druckfestigkeit erfolgt nach ASTM D 1621.

Damit ist das Bruchverhalten dieser Strukturschäume FEA-Berechnungen zugänglich.

Demnach umfasst die vorliegende Erfindung auch einen Strukturschaum gekennzeichnet durch eine Druckspannung von mindestens 5 MPa vorzugsweise mindestens 10 MPa und Insbesondere mindestens 15 MPa bei einer Deformation des-Prüfkörpers um 10 bis 15% bei -20 °C und keinen signifikanten Abfall des Kraftniveaus bis zu einer Deformation des Prüfkörpers um 50% bei -20 °C, gemessen nach ASTM D 1621, sowie einen Strukturschaum, der auch bei 0 °C diese Eigenschaften aufweist. Ein Strukturschaum mit diesen Eigenschaften ist durch Expansion und thermische Härtung einer vorstehend beschriebenen erfindungsgemäßen expandierbaren, thermisch härtbaren Zusammensetzung erhältlich.

Die erfindungsgemäßen Zusammensetzungen können nicht nur für 3-dimensionale, nicht klebrige Rahmenstrukturversteifungen angewendet werden. Auch für die Flächenversteifung, die heute mit klebrigen, Glasfasermatten verstärkten Platten durchgeführt wird, ist es von erheblichem Vorteil, wenn nicht bereits bei geringen Deformationen das Versteifungsmaterial bricht, sondern möglichst lange der Verformung folgt. Überraschenderweise wird bei den erfindungsgemäßen Materialien zusätzlich ein Zurückstellen der Verformung beobachtet, wenn die Deformation nicht über den Bruchbereich des Versteifungsmaterials hinaus erfolgte. Diese Eigenschaft ist besonders im Fahrzeugbau erwünscht. Daher umfasst die vorliegende Erfindung die Verwendung der wie vorstehend beschrieben erhältlichen Formkörper zur Versteifung und Verstärkung von Bauteilen, insbesondere Bauteilen für weiße Ware oder von Karosseriebauteilen wie Karosserierahmen, Türen, Kofferraumdeckel, Motorhauben und/oder Dachteilen im Automobilbau, sowie ein entsprechend verstärktes Fahrzeug oder metallisches Bauteil.

In den nachfolgenden Ausführungsbeispielen soll die Erfindung näher erläutert werden, wobei die Auswahl der Beispiele keine Beschränkung des Umfanges des Erfindungsgegenstandes darstellen soll. Sie sollen lediglich in modellhafter Weise einzelne Ausführungsformen und vorteilhafte Wirkungen der Erfindung darstellen.

Alle in den nachfolgenden Beispielen gegebenen Mengenangaben sind Gewichtsteile bzw. Gewichtsprozent, falls nicht anders angegeben.

### Beispiele:

Die in der nachfolgenden Tabelle aufgeführten Bindemittel - Zusammensetzungen wurden in einem evakuierbaren Planetenmischer bis zur Homogenität gemischt, dabei wurde sichergestellt, dass die Temperatur der Masse 70 ° C nicht überstieg.

| | Beispiel 1 | Vergleich |
|---|---|---|
| Festes Epoxidharz¹⁾ | 55,00 | 38,00 |
| Flüssiges Epoxidharz¹⁾ | | 5,00 |
| Flexibilisiertes Epoxidharz¹⁾ | | 15,00 |
| Polyetheramin ²⁾ | 5,00 | - |
| Phenolverbindung ³⁾ | 9,00 | - |
| EVA-Copolymer⁴⁾ | 6,00 | - |
| Kreide, gefällt, gecoatet | 7,80 | 7,4 |
| Fasern | | 0,5 |
| Glashohlkugeln | | 26,5 |
| Füllstoff⁵⁾ | 8,00 | - |
| Rußpaste | 0,60 | 0,4 |
| Dicyandiamid | 1,50 | 2,5 |
| Beschleuniger⁶⁾ | 0,60 | 1,5 |
| Treibmittels | 2,00 | 1,2 |
| Pyrogene Kieselsäure⁸⁾ | 4,50 | 2 |

1.) Bei Raumtemperatur festes Epoxidharz auf Basis Bisphenol A, Molekulargewicht (Mₙ) 1150, Schmelzbereich 64 - 74°C; bei Raumtemperatur flüssiges Epoxidharz auf Basis Bisphenol A, Molekulargewicht (Mₙ) ca. 188; flexibilisiertes Epoxidharz gemäß der Lehre der WO00/52086
2.) Polyoxypropylenglycol mit terminalen primären Aminogruppen, Equivalentgewicht gegen Isocyanatgruppen 1030 g/equ
3.) lineare Molekülstruktur, Gehalt an phenolischen OH-Gruppen 2000 mmol/kg, Schmelzbereich 80 - 90 °C
4.) Ethylen/Vinylacetat/Kohlenmonoxid-Coplymer, kristalline Schmelztemperatur 45 °C
5.) 2- Komponentenfüllstoff aus Muskovit- Glimmer und Quarz
6.) fein gemahlener Beschleuniger (Aminoaddukt an Epoxidharz mit Epoxy- und tertiären Aminogruppen)
7.) Treibmittel (Kunststoffhohlkugeln "Expancel 091 DU 140", Fa. Pierce & Stevens)
8.) Pyrogene Kieselsäure Cab-O-sil TS 720, Fa. Cabot

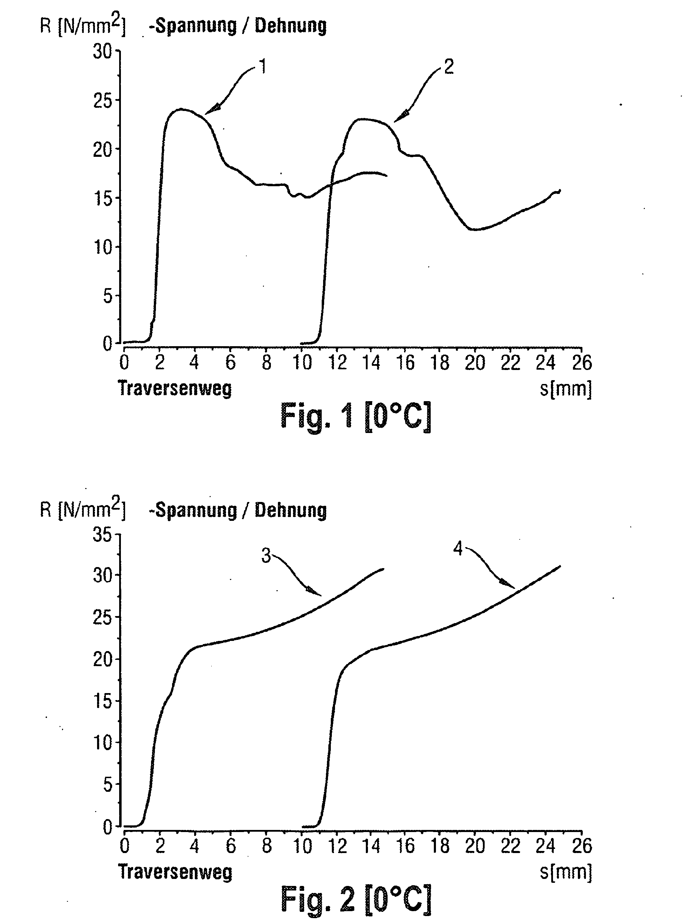

Aus den erfindungsgemäßen Zusammensetzungen gemäß Beispiel 1 sowie den Zusammensetzungen gemäß Vergleichsbeispiel wurden Prüfkörper zur Druckfestigkeitsmessung nach ASTM D 1621 hergestellt und diese zur Expansion und Aushärtung der Prüfkörper 25 min einer Temperatur von 175 °C ausgesetzt (Labortrockenofen). Anschließend wurden Druckfestigkeiten gemäß ASTM D 1621 an den Prüfkörpern bei verschiedenen Temperaturen gemessen. Die Messergebnisse für 0 °C und -20 °C sind in den Figuren 1 bis 4 als Druckspannungskurven gegen den Traversenweg der Prüfmaschine dargestellt. Dabei wurden mindestens 2 Messungen je Zusammensetzung und Temperaturdurchgeführt.

In den Figuren 1 und 3 sind die Druckspannungskurven bei 0 °C bzw. -20 °C für die aus dem Vergleichsbeispiel hergestellten Prüfkörper dargestellt. Zur besseren Übersicht wurden die Kurven der einzelnen Messungen jeweils um 10 mm Traversenweg versetzt aufgezeichnet.

In den Figuren 2 und 4 sind die Druckspannungskurven bei 0 °C bzw. -20 °C für die aus dem erfindungsgemäßen Beispiel hergestellten Prüfkörper dargestellt. Zur besseren Übersicht wurden die Kurven der einzelnen Messungen wiederum jeweils um 10 mm Traversenweg versetzt aufgezeichnet.

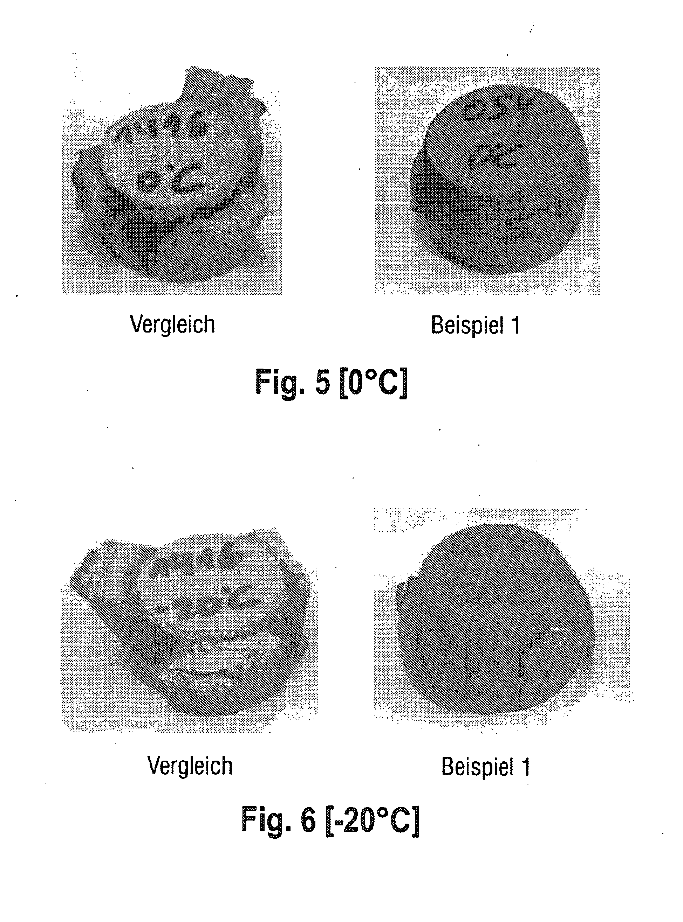

Aus dem Vergleich der Kurven (3) und (4) in Figur 2 des erfindungsgemäßen Beispiels geht hervor, dass nach dem steilen Anstieg der Druckspannung während der ersten 3 mm des Verformungsweges bei weiterer Verformung ein weiterer stetiger Anstieg der Druckspannung zu beobachten ist. Beim Vergleichsbeispiel erfolgt nach dem ersten steilen Anstieg ein starker Rückgang der Druckspannung (siehe Kurven (1) und (2) in figur 1). Dies Ist auf beginnenden Sprödbruch der Prüfkörper zurückzuführen, siehe hierzu die Abbildung des linken Prüfkörpers nach dem Druckfestigkeitstest in Figur 5. Beim erfindungsgemäß hergestellten rechten Prüfkörper in Fig. 5 wird nur eine geringfügige duktile Verformung beobachtet.

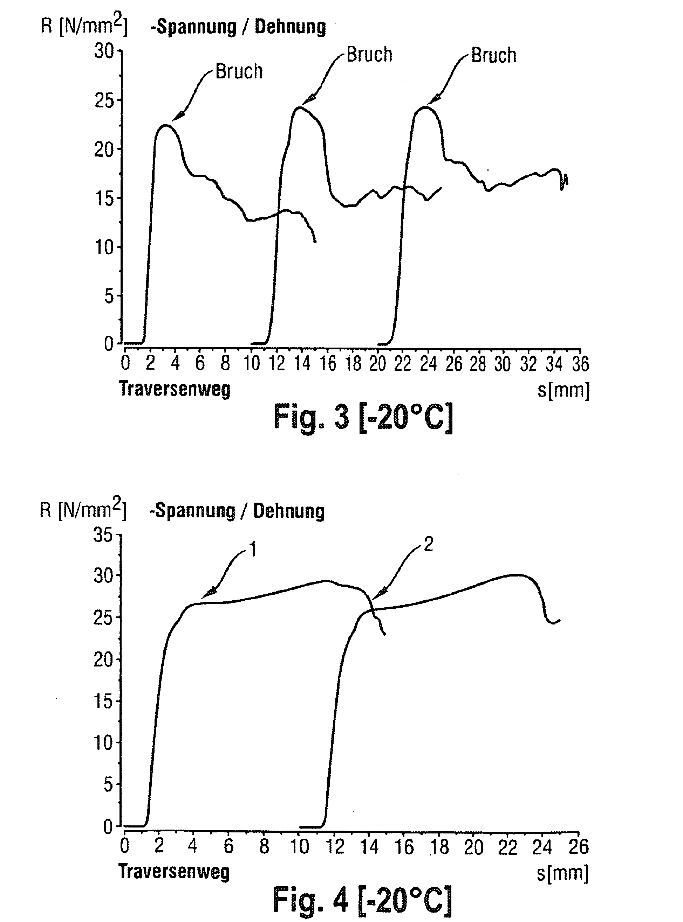

Noch deutlicher wird der Vorteil der erfindungsgemäß hergestellten Prüfkörper beim Druckfestigkeitstest bei -20 °C: In Figur 3 sind die Ergebnisse der 3 Prüfkörper gemäß Vergleichsversuch dargestellt. Hier wird bereits nach ca. 2 mm Traversenweg infolge des Sprödbruchs ein drastischer Abfall der Druckfestigkeit beobachtet (Punkt "Bruch" in den Kurven), während bei den erfindungsgemäßen Prüfkörpern bei fortschreitender Deformation ein weiterer kontinuierlicher Anstieg der Druckfestigkeit beobachtet wird. In der Figur 6 ist der durch Sprödbruch deformierte Prüfkörper des Vergleichsversuches links abgebildet, während beim erfindungsgemäß hergestellten rechten Prüfkörper in Fig. 6 wiederum nur eine geringfügigere duktile Verformung beobachtet wird.

## Patentansprüche

1. Expandierbare, thermisch härtbare Zusammensetzung enthaltend
a) mindestens ein Epoxidharz,
b) mindestens eine bei Raumtemperatur feste Phenolverbindung,
c) mindestens ein Polyetheramin,
d) mindestens ein Treibmittel,
e) mindestens einen Härter,
f) mindestens einen Füllstoff.

2. Expandierbare, thermisch härtbare Zusammensetzung nach Anspruch 1, **dadurch gekennzeichnet, dass** sie zusätzlich ein Ethylen-Vinylacetat-Copolymer enthält.

3. Expandierbare, thermisch härtbare Zusammensetzung nach Anspruch 1 oder 2, **dadurch gekennzeichnet, dass** die Phenolverbindung einen Schmelzpunkt oberhalb von 60° C aufweist.

4. Expandierbare, thermisch härtbare Zusammensetzung nach Anspruch 3, **dadurch gekennzeichnet, dass** die Phenolverbindung einen Schmelzpunkt zwischen 70 und 100° C aufweist.

5. Expandierbare, thermisch härtbare Zusammensetzung nach Anspruch 3 oder 4, **dadurch gekennzeichnet, dass** die Phenolverbindung einen Gehalt an phenolischen Hydroxylgruppen zwischen 1 400 und 2 500 mmol/kg aufweist.

6. Expandierbare, thermische härtbare Zusammensetzung nach Anspruch 1 bis 5, **dadurch gekennzeichnet, dass** mindestens ein Epoxidharz ein Glycidylether eines Polyphenols ist.

7. Expandierbare, thermische härtbare Zusammensetzung nach Anspruch 6, **dadurch gekennzeichnet, dass** mindestens ein Epoxidharz ein Glycidylether eines Polyphenols ist, das bei Raumtemperatur fest ist und ein Molekulargewicht (Mₙ) oberhalb von 700 aufweist.

8. Expandierbare, thermisch härtbare Zusammensetzung nach Anspruch 1 bis 7, **dadurch gekennzeichnet, dass** das Polyetheramin ein difunktionelles Polyoxypropylen mit terminalen primären Aminogruppen ist.

9. Expandierbare, thermisch härtbare Zusammensetzung nach Anspruch 1 bis 8, **dadurch gekennzeichnet, dass** das Polyetheramin ein mittleres Molekulargewicht (Mₙ) von 1000 bis 3000 aufweist.

10. Expandierbare, thermisch härtbare Zusammensetzung nach mindestens einem der vorhergehenden Ansprüche, enthaltend
| | | |
|---|---|---|
| (a) | festes Epoxidharz | 2 bis 65 Gew.%, |
| (b) | Phenolverbindung | 1 bis 30 Gew.%, |
| (c) | Polyetheramin | 0,5 bis 15 Gew.%, |
| (d) | Treibmittel | 0,1 bis 5 Gew.%, |
| (e) | Härter und Beschleuniger | 1,5 bis 5 Gew.%, |
| (f) | Glimmerhaltiger Füllstoff | 0 bis 40 Gew. %, |
| (g) | Weitere Füllstoffen | 5 bis 20 Gew.-% |
| (h) | Reaktivverdünner | 0 bis 15 Gew.%, |
| (i) | Ethylen-Vinylacetat-Copolymer | 0 bis 10 Gew.%, |
| (j) | Fasern | 0 bis 30 Gew.%, |
| (k) | Pigmente | 0 bis 1 Gew.%, |
wobei die Summe der Gesamtbestandteile 100 Gew.-% ergibt.

11. Verfahren zur Herstellung von expandierbaren, thermisch härtbaren Formkörpern, **gekennzeichnet durch** die folgenden wesentlichen Verfahrensschritte
a) Mischen der Zusammensetzungs-Bestandteile nach mindestens einem der Ansprüche 1 bis 10 bei Temperaturen unterhalb von 110 °C,
b) Extrusion der Zusammensetzung bei Temperaturen unterhalb von 110 °C, unter Granulatbildung, ggf. auf ein gekühltes Metallband,
c) Abkühlen des so geformten Granulats,
d) Ggf. Zwischenlagerung des Granulats,
e) Förderung des Granulates in eine Spritzguss-Maschine,
f) Aufschmelzen des Granulates bei Temperaturen unterhalb von 110 °C und Injektion der Schmelze in die vorbestimmte Form der Spritzguss-Maschine,
g) Abkühlen des gebildeten Formkörpers und Entnahme des Formkörpers aus der Form.

12. Verfahren zur Herstellung von expandierbaren, thermisch härtbaren Formkörpern, **gekennzeichnet durch** die folgenden wesentlichen Verfahrensschritte
a) Mischen der Zusammensetzungs- Bestandteile nach mindestens einem der Ansprüche 1 bis 10 bei Temperaturen unterhalb von 110 °C,
b) Extrusion der Zusammensetzung bei Temperaturen unterhalb von 110 °C unter Bildung eines geformten Zwischenproduktes,
c) Abkühlen des so geformten Zwischenproduktes,
d) ggf. Zwischenlagerung des geformten Zwischenproduktes,
e) Förderung des geformten Zwischenproduktes in den Vorratsbehälter einer Spritzguss-Maschine,
f) Aufschmelzen des geformten Zwischenproduktes bei Temperaturen unterhalb von 110 °C und Injektion der Schmelze in die vorbestimmte Form der Spritzguss-Maschine,
g) Abkühlen des gebildeten Formkörpers und Entnahme des Formkörpers aus der Form.

13. Spritzgegossener Formkörper hergestellt nach Anspruch 11 oder 12.

14. Fahrzeug oder metallisches Bauteil, **dadurch gekennzeichnet, dass** es mit Formkörpern gemäß Anspruch 13 versteift oder verstärkt wurde.

## Claims

1. An expansible, thermally curable composition containing
a) at least one epoxy resin,
b) at least one phenol compound solid at room temperature,
c) at least one polyetheramine,
d) at least one propellant,
e) at least one hardener,
f) at least one filler.

2. The expansible, thermally curable composition according to claim 1, **characterized in that** it further contains an ethylene-vinyl acetate copolymer.

3. The expansible, thermally curable composition according to claim 1 or 2, **characterized in that** the phenol compound has a melting point above 60°C.

4. The expansible, thermally curable composition according to claim 3, **characterized in that** the phenol compound has a melting point between 70 and 100°C.

5. The expansible, thermally curable composition according to claim 3 or 4, **characterized in that** the phenol compound has a content of phenolic hydroxyl groups between 1,400 and 2,500 mmol/kg.

6. The expansible, thermally curable composition according to claim 1 to 5, **characterized in that** at least one epoxy resin is a glycidyl ether of a polyphenol.

7. The expansible, thermally curable composition according to claim 6, **characterized in that** at least one epoxy resin is a glycidyl ether of a polyphenol, which is solid at room temperature and has a molecular weight (Mₙ) above 700.

8. The expansible, thermally curable composition according to claim 1 to 7, **characterized in that** the polyetheramine is a difunctional polyoxypropylene with terminal primary amine groups.

9. The expansible, thermally curable composition according to claim 1 to 8, **characterized in that** the polyether amine has an average molecular weight (Mₙ) from 1,000 to 3,000.

10. The expansible, thermally curable composition according to at least one of the preceding claims, containing
| | | |
|---|---|---|
| (a) | 2 to 65% by weight | of solid epoxy resin, |
| (b) | 1 to 30% by weight | of phenol compound, |
| (c) | 0.5 to 15% by weight | of polyetheramine, |
| (d) | 0.1 to 5% by weight | of propellant, |
| (e) | 1.5 to 5% by weight | of hardener and accelerator, |
| (f) | 0 to 40% by weight | of micaceous filler, |
| (g) | 5 to 20% by weight | of further fillers, |
| (h) | 0 to 15% by weight | of reagent diluent, |
| (i) | 0 to 10% by weight | of ethylene-vinylacetate copolymer, |
| (j) | 0 to 30% by weight | of fibers, |
| (k) | 0 to 1% by weight | of pigments, |
wherein the sum of the total components is 100% by weight.

11. A method for preparing expansible thermally curable molded bodies, **characterized by** the following essential steps
a) mixing the composition components according to at least one of claims 1 to 10 at temperatures below 110°C,
b) extruding the composition at temperatures below 110°C with formation of granulates, if necessary, on a cooled metal band,
c) cooling the thereby molded granulate,
d) if necessary, intermediately storing the granulate,
e) conveying the granulate into an injection-molding machine,
f) melting the granulate at temperatures below 110°C and injecting the melt in a predetermined mold of the injection-molding machine,
g) cooling the formed molded body and removing the molded body from the mold.

12. A method for preparing expansible, thermally curable molded bodies, **characterized by** the following essential steps
a) mixing the composition components according to at least one of claims 1 to 10 at temperatures below 110°C,
b) extruding the composition at temperatures below 110°C with formation of a molded intermediate product,
c) cooling the thereby molded granulate,
d) if necessary, intermediately storing the molded intermediate product,
e) conveying the molded intermediate product into a reservoir of an injection-molding machine,
f) melting the molded intermediate product at temperatures below 110°C and injecting the melt in a predetermined mold of the injection-molding machine,
g) cooling the formed molded body and removing the molded body from the mold.

13. The injection-molded body prepared according to claim 11 or 12.

14. Vehicle or metal component, **characterized in that**, it has been stiffened or strengthened with molded bodies according to claim 13.

## Revendications

1. Composition expansible thermodurcissable, contenant :
a) au moins une résine époxyde ;
b) au moins un composé de phénol solide à la température ambiante ;
c) au moins une polyétheramine ;
d) au moins un agent moussant ;
e) au moins un durcisseur ;
f) au moins une matière de charge.

2. Composition expansible thermodurcissable selon la revendication 1, **caractérisée en ce qu'**elle contient en outre un copolymère d'éthylène-acétate de vinyle.

3. Composition expansible thermodurcissable selon la revendication 1 ou 2, **caractérisée en ce que** le composé de phénol présente un point de fusion supérieure à 60 °C.

4. Composition expansible thermodurcissable selon la revendication 3, **caractérisée en ce que** le composé de phénol présente un point de fusion entre 70 et 100 °C.

5. Composition expansible thermodurcissable selon la revendication 3 ou 4, **caractérisée en ce que** le composé de phénol présente une teneur en groupes hydroxyle phénoliques entre 1400 et 2500 mmol/kg.

6. Composition expansible thermodurcissable selon les revendications 1 à 5, **caractérisée en ce que** au moins une résine époxyde représente un éther glycidylique d'un polyphénol.

7. Composition expansible thermodurcissable selon la revendication 6, **caractérisée en ce que** au moins une résine époxyde représente un éther glycidylique d'un polyphénol qui est solide à la température ambiante et qui présente un poids moléculaire (Mₙ) supérieur à 700.

8. Composition expansible thermodurcissable selon les revendications 1 à 7, **caractérisée en ce que** la polyétheramine représente un polyoxypropylène difonctionnel comprenant des groupes amino primaires terminaux.

9. Composition expansible thermodurcissable selon les revendications 1 à 8, **caractérisée en ce que** la polyétheramine présente un poids moléculaire moyen (Mₙ) de 1000 à 3000.

10. Composition expansible thermodurcissable selon au moins une des revendications précédentes, contenant
(a) une résine époxyde solide à concurrence de 2 à 65 % en poids ;
(b) un composé de phénol à concurrence de 1 à 30 % en poids ;
(c) une polyétheramine à concurrence de 0,5 à 15 % en poids ;
(d) un agent moussant à concurrence de 0,1 à 5 % en poids ;
(e) un durcisseur et un accélérateur à concurrence de 1,5 à 5 % en poids ;
(f) une matière de charge contenant du mica à concurrence de 0 à 40 % en poids ;
(g) des matières de charge supplémentaires à concurrence de 5 à 20 % en poids ;
(h) un diluant réactif à concurrence de 0 à 15 % en poids ;
(i) un copolymère d'éthylène-acétate de vinyle à concurrence de 0 à 10 % en poids ;
(j) des fibres à concurrence de 0 à 30 % en poids ;
(k) des pigments à concurrence de 0 à 1 % en poids ; la somme de l'ensemble des constituants représentant 100 % en poids.

11. Procédé pour la fabrication de corps moulés expansibles thermodurcissables, **caractérisé par** les étapes opératoires essentielles suivantes :
a) mélange des constituants de la composition selon au moins une des revendications 1 à 10 à des températures inférieures à 110 ou ;
b) extrusion de la composition à des températures inférieures à 110 °C avec formation d'un produit de granulation, le cas échéant sur une bande métallique refroidie ;
c) refroidissement du produit de granulation ainsi façonné ;
d) le cas échéant, entreposage du produit de granulation ;
e) transport du produit de granulation dans une machine de moulage par injection ;
f) mise en fusion du produit de granulation à des températures inférieures à 110 °C et injection de la masse fondue dans le moule prédéfini de la machine de moulage par injection ;
g) refroidissement du corps moulé obtenu et retrait du corps moulé du moule.

12. Procédé pour la fabrication de corps moulés expansibles thermodurcissables, **caractérisé par** les étapes opératoires essentielles suivantes :
a) mélange des constituants de la composition selon au moins une des revendications 1 à 10 à des températures inférieures à 110 °C ;
b) extrusion de la composition à des températures inférieures à 110 °C avec formation d'un produit intermédiaire façonné ;
c) refroidissement du produit intermédiaire ainsi façonné ;
d) le cas échéant, entreposage du produit intermédiaire façonné ;
e) transport du produit intermédiaire façonné dans le récipient de réserve d'une machine de moulage par injection ;
f) mise en fusion du produit intermédiaire façonné à des températures inférieures à 110 °C et injection de la masse fondue dans le moule prédéfini de la machine de moulage par injection ;
g) refroidissement du corps moulé obtenu et retrait du corps moulé du moule.

13. Corps moulé obtenu par moulage par injection, fabriqué conformément à la revendication 11 ou 12.

14. Véhicule ou composant métallique, **caractérisé en ce qu'**il a été rigidifié ou renforcé avec des corps moulés selon la revendication 13.
